Europäisches Patentamt

(19) European Patent Office

Office européen des brevets

(11) EP 0 714 189 A2

(12) EUROPEAN PATENT APPLICATION

(43) Date of publication:
29.05.1996 Bulletin 1996/22

(51) Int. Cl.6: H04L 5/06

(21) Application number: 95116689.1

(22) Date of filing: 23.10.1995

(84) Designated Contracting States:
DE FR GB

(30) Priority: 24.10.1994 JP 258196/94

(71) Applicant: PIONEER ELECTRONIC CORPORATION
Meguro-ku Tokyo (JP)

(72) Inventors:
• Shibata, Koji
Kawagoe-shi, Saitama (JP)
• Ichikawa, Toshihito
Kawagoe-shi, Saitama (JP)
• Ohsawa, Susumu
Kawagoe-shi, Saitama (JP)
• Takayama, Masami
Kawagoe-shi, Saitama (JP)
• Kuriki, Yuki
Kawagoe-shi, Saitama (JP)

(74) Representative: Finsterwald, Manfred et al
Manitz, Finsterwald & Partner
Robert-Koch-Strasse 1
D-80538 München (DE)

(54) Receiver for multicarrier signals

(57) A receiver which reduces unnecessary components generated by multiplication of a multicarrier frequency signal with harmonics of a reference frequency signal when the multicarrier frequency signal is frequency converted. The receiver for receiving transmitted signals including a multicarrier modulated signal has a system block (322) for generating a reference frequency signal, a system block (323) for removing harmonic components of the reference frequency signal, and a frequency converting system block (320) for multiplying the harmonic removed output signal by a received signal to frequency convert the received signal to a base band signal. With this configuration, decoding processing can be correctly performed at a later stage, and a circuit for removing the unnecessary components can be simply configured.

FIG.3

EP 0 714 189 A2

**Description**

BACKGROUND OF THE INVENTION

1. Field of the Invention

The present invention relates to a receiver for receiving transmitted signals in accordance with the multicarrier modulation scheme. The present invention is also directed to a receiver for receiving transmitted signals in accordance with the OFDM (Orthogonal Frequency Division Multiplexing) modulation scheme.

2. Description of Background Information

Receivers for receiving transmitted waves in accordance with the OFDM multicarrier modulation scheme are disclosed in Japanese International Patent Application Kokunai Kohyo (National Laying-Open) No. 5-504037 (International Patent Application PCT/FR91/00951) and so on.

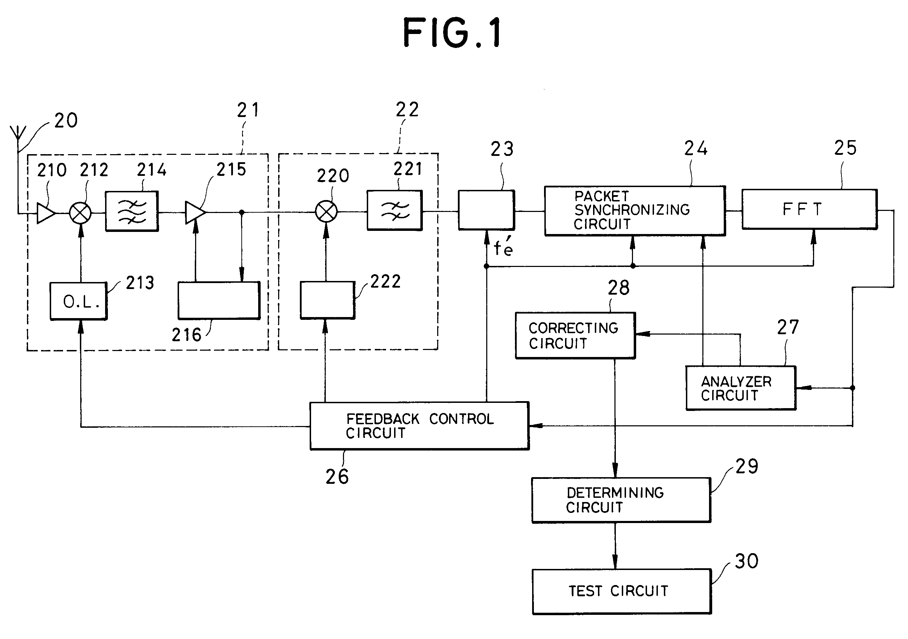

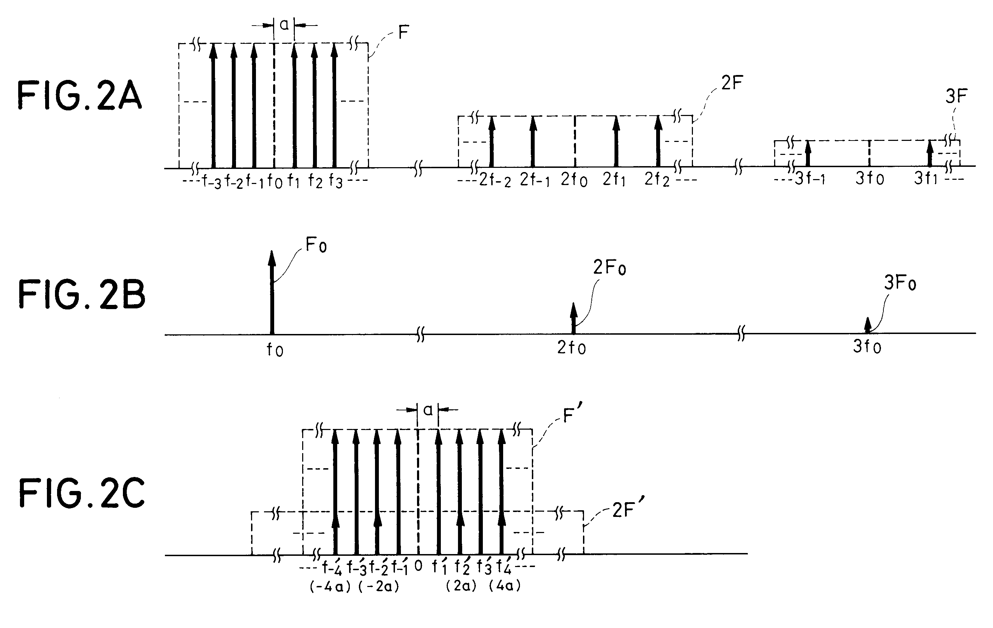

The above-mentioned publication document includes Fig. 2 showing a block diagram of the receiver. A duplication of this block diagram is shown in Fig. 1.

Referring specifically to Fig. 1, a received signal including multicarrier modulated waves, which constitutes a signal captured by a receiving antenna 20, is amplified by an amplifier 210 in a receiver circuit 21, and mixed down in a mixer 212 based on an output frequency signal of a local oscillator 213. In other words, the received signal is converted from a received frequency to an intermediate frequency. The mixed-down signal is passed through a band pass filter 214 to remove unnecessary components therefrom, and then amplified by an amplifier 215 which forms a negative feedback loop together with an auto gain control circuit 216. The intermediate frequency signal thus generated is converted to a base band signal in a mixer 220 based on an output frequency signal of a local oscillator 222. The generated base band signal is passed through a low-pass filter 221, and demodulated by circuits at subsequent stages which include a demodulator circuit composed of an analog-to-digital convertor 23, a packet synchronizing circuit 24 and a Fast Fourier Transform circuit 25, a feedback control circuit 26, an analyzer circuit 27, a correcting circuit 28, a determining circuit 29, and a test circuit 30. It should be noted that according to the above-mentioned official gazette, these circuits and their operations are also described in the specification of International Patent Application PCT/FR89/00546.

In the OFDM multicarrier modulation, the frequencies of respective carriers included in OFDM modulated waves are defined to be placed at equal frequency intervals on both sides of a reference frequency (center frequency). Also, the OFDM modulated waves are often transmitted after they are up-converted in the transmission system. This situation is represented by the leftmost frequency spectrum F in Fig. 2A, where the spectra of the respective carriers exist at frequency intervals a, centered on a reference frequency $f_0$. Stated another way, the spectra of the respective carriers are aligned equally spaced by the interval a. It should be noted that this figure F is drawn on the assumption that a carrier having an frequency equal to the reference frequency $f_0$ does not exist. The OFDM modulated waves as illustrated are received by the above described receiver as shown in Fig. 1, wherein the following phenomena may occur in the mixers 212 and 220 for dropping the frequency to the base band.

First, up to the mixing, due to input up-converted OFDM modulated waves, harmonic components of a signal having a basic spectrum F (basic signal) are generated as shown in Fig. 2A as spectra 2F and 3F. While the spectrum 2F represents second harmonics and the spectrum 3F third harmonics, respectively, higher-order harmonics are also generated other than those illustrated harmonics. On the other hand, an output signal of the local oscillator (reference frequency signal) has the same frequency as the center frequency $f_0$ of the spectrum F and a spectrum $F_0$ as shown in Fig. 2B. In addition, harmonics 2F, 3F, ... of the reference frequency signal are generated during the mixing due to the reference frequency signal input to the mixer. The frequency is down-converted by these two inputs to the mixers to generate a signal having a spectrum as shown in Fig. 2C. It should be noted here that the generated signal includes unnecessary components generated by multiplications of the harmonics of the respective carriers by the harmonics of the reference frequency signal.

For example, a second harmonic generated from a carrier at frequency $f_1$ existing in the basic spectrum F has a spectrum at frequency $2f_1$, i.e., $2(f_0+a)$. On the other hand, a second harmonic of the reference frequency signal has a spectrum at frequency $2f_0$. Then, these harmonics are mixed with each other to generate an unnecessary frequency component which may be substantially derived by:

$$2f_1 - 2f_0 = 2(f_0+a) - 2f_0 = 2a$$

The frequency 2a of the unnecessary component corresponds to a frequency $f_2'$ which is a converting frequency for a frequency $f_2$ in Fig. 2A. Fig. 2C represents a mixture of the carrier component at frequency $f_2$ and the unnecessary component at frequency 2a with overlapping arrows. Giving another example, a second harmonic generated from the carrier at frequency $f_2$ existing in the basic spectrum F has a spectrum at frequency $2f_2$, i.e., $2(f_0+2a)$, while a second harmonic of the reference frequency signal has a spectrum at frequency $2f_0$. Then, these harmonics are mixed with each other to generate an unnecessary frequency component at a frequency substantially derived by:

$$2f_2 - 2f_0 = 2(f_0+2a) - 2f_0 = 4a$$

It is understood that the frequency 4a of the unnecessary component corresponds to a frequency $f_4$' which is a converting frequency for a frequency $f_4$ in Fig. 2A, and a carrier component at frequency $f_4$' and the unnecessary component at frequency 4a exist together.

As described above, the unnecessary components generated by the multiplication of the second harmonics of the respective received carriers by the second harmonic of the reference frequency signal exist at every 2a in the spectrum after the frequency conversion, i.e., in every other carrier spectrum from frequencies $f_1$' and f-1' (a converting frequency for a frequency f-1).

Since these unnecessary components lie within the output band of the mixer (within a frequency band in which received OFDM modulated waves are to be converted), they cannot be removed by filtering after the mixing. In addition, it has been found that as the unnecessary components are larger, correct modulation is prevented thereby.

## OBJECT AND SUMMARY OF THE INVENTION

The present invention has been made in view of the problem mentioned above, and its object is to provide a receiver which is capable of reducing unnecessary components generated by the multiplication of a multicarrier modulated signal by harmonics of a reference frequency signal when the multicarrier modulated signal is frequency converted.

The multicarrier modulated signal receiver according to the present invention is a receiver for receiving transmitted signals including a multicarrier modulated signal comprising means for generating a reference frequency signal, means for removing harmonic components of the reference frequency signal, and frequency converting means for multiplying a harmonic removed output signal of the removing means by a received signal to frequency convert the received signal to a base band signal.

According to the multicarrier modulated signal receiver, harmonic components are removed from the reference frequency signal used for the frequency conversion of received signals.

## BRIEF DESCRIPTION OF THE DRAWINGS

Fig. 1 is a block diagram showing the configuration of a receiver for receiving transmitted waves in accordance with a conventional multicarrier modulation scheme;

Figs. 2A through 2C are diagrams showing the spectra of a multicarrier modulation signal, an output signal of a local oscillator, and an output signal of a mixer;

Fig. 3 is a block diagram showing the configuration of a multicarrier modulated signal receiver of an embodiment according to the present invention;

Figs. 4A through 4C are diagrams each showing a filter characteristic required for a harmonics removing filter inserted in a signal receiving block as a constituent for removing unnecessary components, and the spectrum of a received signal;

Fig. 5 is a diagram showing a filter characteristic required for a harmonics removing filter inserted in a local oscillator as a constituent for removing unnecessary components, and a spectrum of a local oscillated signal;

Fig. 6 shows waveform charts of two carriers included in a multicarrier modulation signal;

Fig. 7 is a circuit diagram showing the configuration of a trap-type filter;

Fig. 8 is a block diagram showing the configuration of a multicarrier modulated signal receiver of another embodiment according to the present invention; and

Fig. 9 is a block diagram showing the configuration of a multicarrier modulated signal receiver of a further embodiment according to the present invention.

## DESCRIPTION OF THE PREFERRED EMBODIMENTS

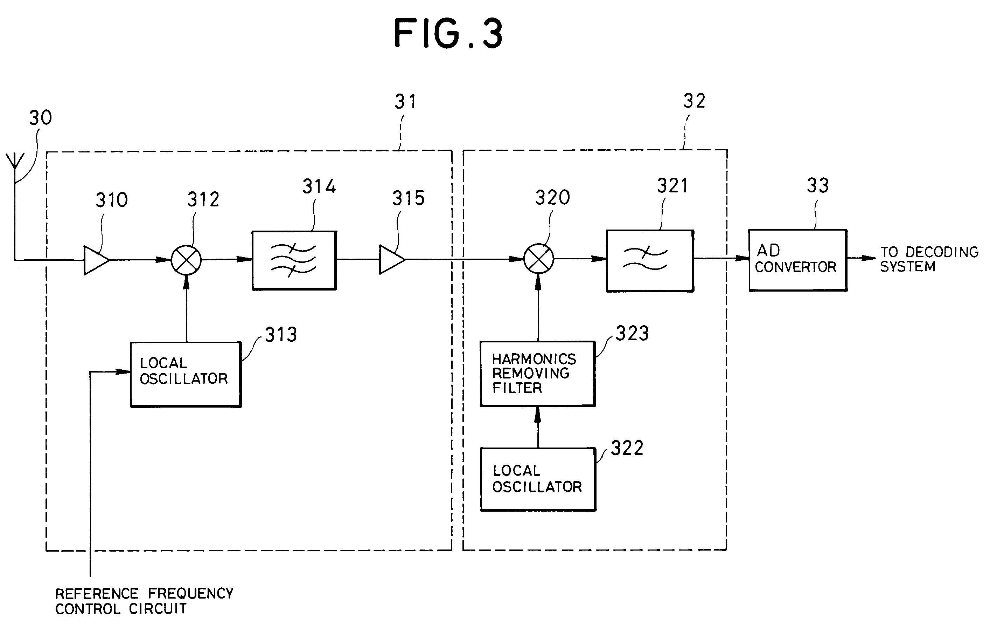

The present invention will hereinafter be described in detail with reference to the accompanying drawings. Fig. 3 shows the configuration of a multicarrier modulated signal receiver of an embodiment according to the present invention.

In Fig. 3, a received signal including multicarrier modulated waves, which is a signal captured by a receiving antenna 30, is amplified by an amplifier 310 in a receiver circuit 31, and mixed down by a mixer 312 (first multiplier) based on an output frequency signal (first reference frequency signal) of a local oscillator 312 comprising, for example, a voltage controlled oscillator (VCO), i.e., the received signal is converted from a received frequency to an intermediate frequency. The local oscillator 313 is set at a reference frequency in accordance with a received frequency at which the receiver itself is to receive signals, in response to a reference frequency control signal from a control system, not shown. The mixed-down signal is passed through a band pass filter 314 to remove unnecessary components therefrom, and amplified, for example, by an amplifier 315 included in a negative feedback loop together with an automatic gain control circuit 216, as described above. An intermediate frequency signal generated thereby is supplied to one input terminal of a mixer 320 (second multiplier) in a convertor circuit 32, and is also converted to a base band signal in the mixer 320 based on an output signal of a harmonics removing filter 323 for filtering an output reference frequency signal (second reference frequency sign) of a local oscillator 322 comprising, for example, VCO or a quartz oscillator with a fixed oscillating frequency. The generated base band signal is supplied to an analog-to-digital (AD) convertor 33 through a low-pass filter 321. A digital output of the AD convertor 33 is transferred to a decoding system, not shown, where it is decoded based on a multicarrier modulation scheme.

It should be noted that this embodiment is characterized by the high frequency component (harmonics) removing filter 323 connected between the local oscillator 322 as a means for generating a reference frequency signal and the mixer (base band mixer) 320 for converting the frequency from an intermediate frequency band to the base band. The filter 323 includes, for example, a trap pass filter, a low-pass filter, or the like. The filter 323 limits higher frequency components in the output reference frequency signal from the local oscillator 322 to prevent the mixer 320 from being supplied with harmonic components corresponding to $2F_0$, $3F_0$, and so on in Fig. 2B. In this way, since a received signal (an intermediate frequency signal output from the amplifier 315) is multiplied only by the basic component of the reference frequency signal corresponding to $F_0$ in Fig. 2B, the resulting base band signal is free from unnecessary components in the mixer band which are generated by the multiplication of harmonics of the received signal by harmonics of the reference frequency signal, as described above.

This embodiment is additionally characterized by a harmonics removing filter inserted in an oscillating signal generating block instead of the signal receiving block. This configuration facilitates arrangement of the filter to be inserted and can efficiently remove the unnecessary components.

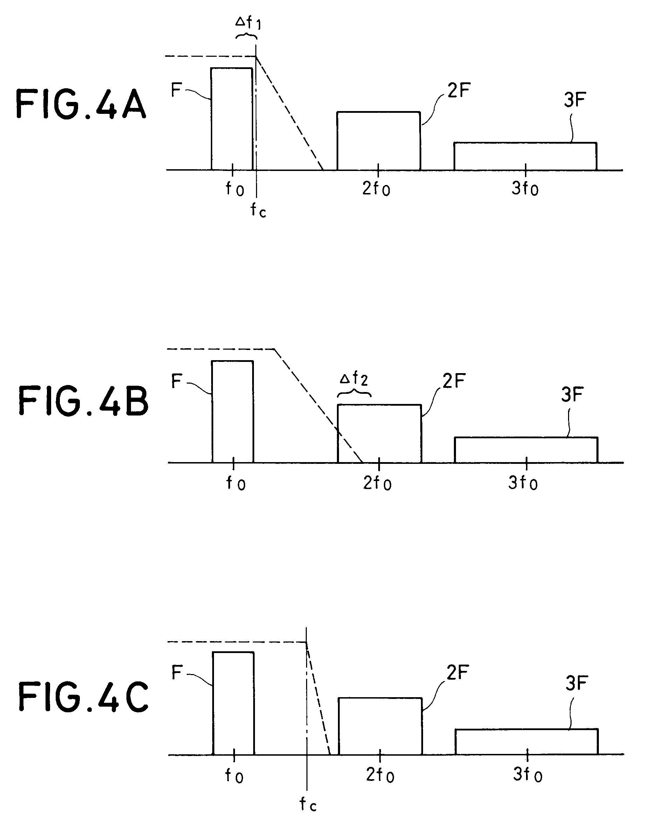

Explaining more specifically, a frequency multiplexed signal (multicarrier modulated signal) received by the receiver has a spectrum F of a basic component thereof extending over a fixed bandwidth, as shown in Fig. 4A which employs similar reference symbols to Fig. 2. When the received signal undergoes processing such as frequency conversion, amplification, and so on in the receiver, this causes harmonics having wider bandwidths than the received signal bandwidth, such as 2F, 3F, .... To avoid this phenomenon, assume that a low-pass filter is inserted in a received signal line (for example, immediately following the output of the amplifier 315). With a filter characteristic of a filter having a low cut-off frequency fc, as indicated by a dotted line in Fig. 4A, this filter prevents part of higher frequency components in the spectrum of a basic signal indicated by $\Delta f_1$ from completely passing therethrough, thus causing the phase of the basic signal to turn. On the other hand, even with a filter having a sufficiently high cut-off frequency fc, if its filter characteristic is such that the boundary between a pass band and cut-off band slowly changes as shown in Fig. 4B, part of lower frequency components in the second harmonic of the basic signal indicated by $\Delta f_2$ cannot be cut completely. Therefore, to avoid the cases shown in Figs. 4A and 4B, it is necessary to employ a filter having a sufficiently high cut-off frequency fc and a characteristic exhibiting an abrupt change at the boundary, as shown in Fig. 4C. The implementation of such a filter, however, requires the application of a high-order filter at present which causes a complicated configuration of the filter to be inserted and a disadvantage in terms of a cost.

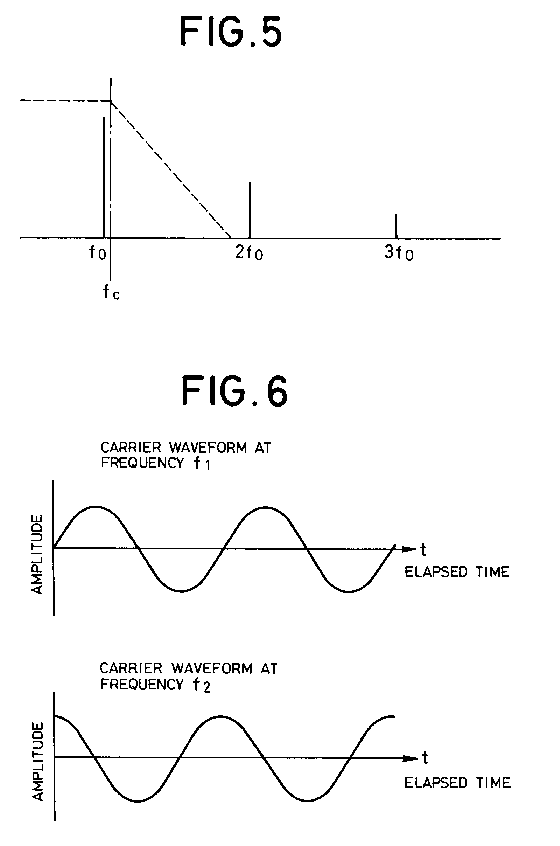

On the other hand, an output reference carrier signal of the local oscillator as employed in this embodiment, although including harmonic components as shown in Fig. 5, has the spectra of its basic component and harmonic components which exhibit extremely narrow bandwidths, unlike the received signal as shown in Fig. 4. Therefore, a filter to be inserted can be designed without restrictions to the setting of the filter characteristic. In addition, even if the cut-off frequency fc is lowered to the vicinity of the center frequency $f_0$ of the basic component to cause the phase of the basic signal to turn, this phase-turned basic signal itself is simply supplied to the mixer as an authentic reference carrier signal. Stated another way, since the mixer regularly operates irrespective of whether the reference carrier signal supplied thereto has a changed phase relative to the output reference carrier signal of the local oscillator, the phase-turned basic signal will not cause any problem. As a result, in the configuration of this embodiment which inserts a harmonics removing filter in the local oscillating signal generating block, it is only necessary to set the filter characteristic so as to sufficiently attenuate the harmonic components which have substantially no bandwidth.

It should be additionally noted that the carriers in a multicarrier modulated signal as mentioned above each have individual phase information. More specifically, the respective carriers having the spectra at frequency $f_1$, $f_2$ on a frequency axis, as shown in Fig. 2A, may be represented by waveforms having individual phases on a time axis as shown in Fig. 6. Therefore, as is the case of the above-explained Fig. 4A, where a low-pass filter is inserted in a received signal line, if the phase of any carrier is shifted due to an inappropriate characteristic of the inserted filter, it is likely that the demodulation is not correctly performed after mixing.

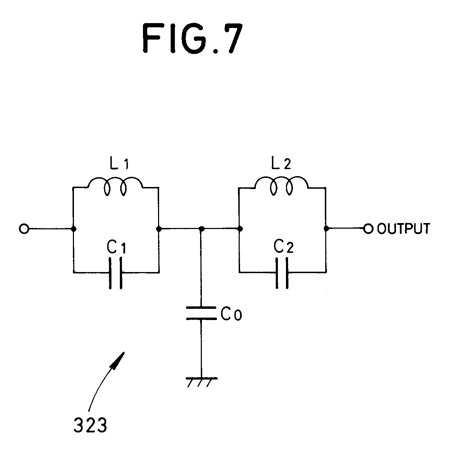

Further, the high frequency component removing filter, when implemented by a trap-type filter as shown in Fig. 7, can efficiently remove unnecessary components with an extremely simple configuration. The reason will be explained below. When the local oscillator is oscillating a sinusoidal wave, the second harmonic exhibits the highest spectrum level as compared with other higher order harmonics, and constitutes a main cause of generating unnecessary components in the mixing. Thus, if the one harmonic, i.e., the second harmonic of the reference frequency signal only is particularly largely attenuated by the trap-type filter as illustrated, the cause of generating almost unnecessary components can be removed.

While in the embodiment shown in Fig. 3, the harmonic components are removed from the reference frequency signal supplied to the base band mixer 320 for converting from the intermediate frequency to the base band frequency, like harmonics removal may be performed on the reference frequency signal supplied to the first stage mixer 312 for converting from a high frequency to an intermediate frequency. Significant effects can be produced also in this configuration.

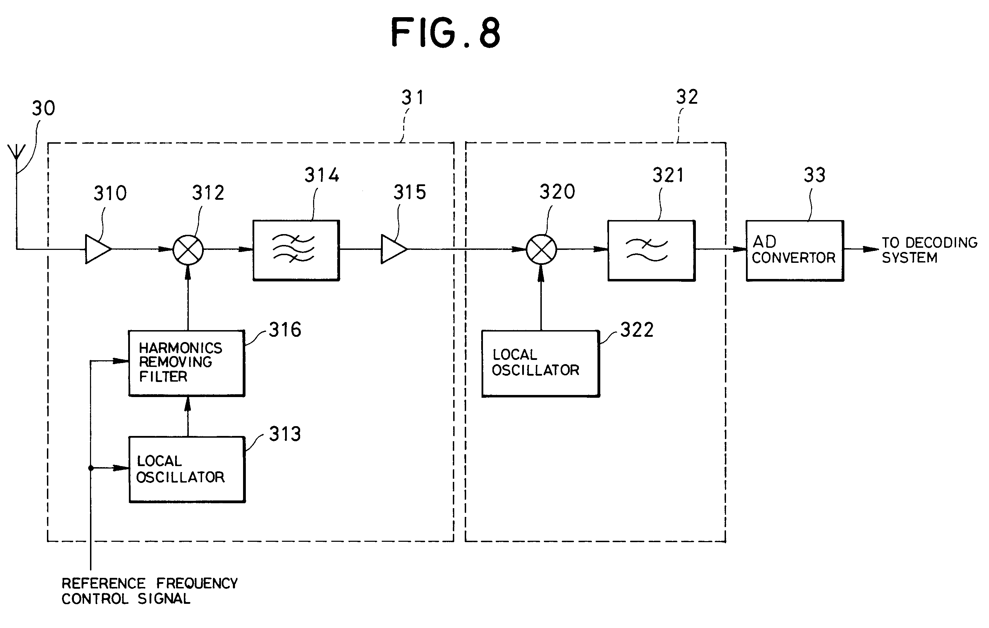

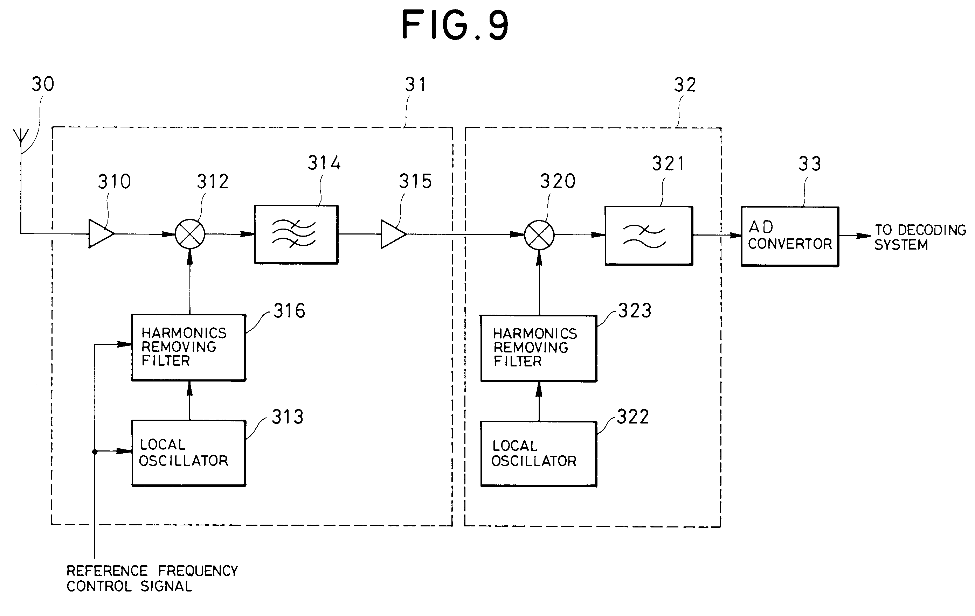

A high frequency component removing filter 316 shown in Fig. 8, which is provided with a characteristic for realizing the above-mentioned function, is configured as a low-pass filter which has its cut-off frequency fc, by way of example, controlled in response to a reference frequency signal supplied to a local oscillator 313. The employment of a cut-off frequency variable filter allows harmonics from being removed from a local oscillating signal corresponding to a receiving frequency corresponding to a so-called receiving channel. It should be noted that since the base band mixer 320 converts only a constant intermediate frequency to the base band frequency, the reference frequency of the local oscillator 322 is also substantially constant, and a filter 316 for filtering the reference frequency signal may be provided with a constant filter characteristic. Furthermore, if the removal of unnecessary components in the base band only is considered, the configuration of Fig. 9 may be proposed as the most preferable arrangement, where harmonic components are removed from each of the reference frequency signals supplied to two mixers 312 and 320.

While the foregoing embodiments have been described in connection with a system for receiving at an antenna radio waves including a multicarrier modulated signal radiated from a transmission system in the air, the present invention may also be applied to a system which is supplied with signals including a multicarrier modulated signal through a cable.

As described above in detail, according to the receiver of the present invention, since harmonic components are removed from a reference frequency signal used for converting the frequency of a received signal, it is possible to reduce unnecessary components which are generated by the multiplication of the reference frequency signal by the harmonics of the reference frequency signal when a multicarrier modulated signal is frequency converted. This allows the latter stages of the receiver to correctly perform decoding processing as well as results in simplifying the design of a component for removing harmonic components, i.e., a component for removing the unnecessary components.

## Claims

1. A receiver for receiving transmitted signals including a multicarrier modulated signal comprising: means for generating a reference frequency signal;

   means for removing harmonic components of said reference frequency signal; and

   frequency converting means for multiplying a harmonic removed output signal of said removing means by a received signal to frequency convert said received signal to a base band signal.

2. A receiver according to claim 1, wherein:

   said generating means generates a first reference frequency signal and a second reference frequency signal;

   said removing means removes harmonic components of said second reference frequency signal; and

   said frequency converting means includes a first multiplier for multiplying said first reference frequency signal by said received signal to frequency convert said received signal to an intermediate frequency band to generate an intermediate frequency signal, and a second multiplier for multiplying a harmonic removed output signal of said removing means by said intermediate frequency signal to frequency convert said intermediate frequency signal to a base band signal.

3. A receiver according to claim 1, wherein:

   said generating means includes a first local oscillator for generating a first reference frequency signal and a second local oscillator for generating a second reference frequency signal;

   said removing means includes a first filter for removing harmonic components of said first reference frequency signal and a second filter for removing harmonic components of said second reference frequency signal; and

   said frequency converting means includes a first multiplier for multiplying an output signal of said first filter by said received signal to frequency convert said received signal to an intermediate frequency band to generate an intermediate frequency signal, and a second multiplier for multiplying an output signal of said second filter by said intermediate frequency signal to frequency convert said intermediate frequency signal to a base band signal.

4. A receiver according to claim 1, 2 or 3, wherein said removing means removes a second harmonic component of said reference frequency signal.

5. A receiver according to claim 4, wherein said removing means is a trap-type filter.

# FIG.1

EP 0 714 189 A2

FIG.2A

FIG.2B

FIG.2C

# FIG.3

FIG.4A

FIG.4B

FIG.4C

# FIG.5

# FIG.6

CARRIER WAVEFORM AT
FREQUENCY $f_1$

CARRIER WAVEFORM AT
FREQUENCY $f_2$

# FIG.7

323

# FIG.8

EP 0 714 189 A2

# FIG.9

TO DECODING SYSTEM

33 A D CONVERTOR

32

321

320

323 HARMONICS REMOVING FILTER

322 LOCAL OSCILLATOR

31

315

314

312

310

316 HARMONICS REMOVING FILTER

313 LOCAL OSCILLATOR

30

REFERENCE FREQUENCY CONTROL SIGNAL